# EUROPÄISCHE PATENTSCHRIFT

(11) **EP 1 272 780 B1**
(45) Veröffentlichungstag und Bekanntmachung des Hinweises auf die Patenterteilung: **22.10.2003**
(21) Anmeldenummer: 01915357.6
(22) Anmeldetag: 15.03.2001
(51) Int. Cl.: F16H 63/32

(54) **SCHALTGABEL FÜR EIN ZAHNRÄDERWECHSELGETRIEBE**
SELECTOR FORK FOR A VARIABLE SPEED GEARBOX PROVIDED WITH TOOTHED GEARS
FOURCHETTE DE SELECTION POUR UNE BOITE DE VITESSES A ENGRENAGES

(30) Priorität: 14.04.2000 DE 10018850
(43) Veröffentlichungstag der Anmeldung: 08.01.2003
(73) Patentinhaber: INA- Schaeffler KG, 91074 Herzogenaurach (DE)
(72) Erfinder: HODEN, Jean-Louis, F-67450 Lampertheim (FR); KUHM, Didier, F-67170 Brumath (FR); HELL, Daniel, F-67350 Pfaffenhoffen (FR); WITTMANN, Raphael, F-67620 Soufflenheim (FR)
(86) Internationale Anmeldenummer: EP0102981
(87) Internationale Veröffentlichungsnummer: WO01079728

(56) Entgegenhaltungen:
- DE-A- 1 680 196
- DE-A- 4 017 955
- DE-A- 4 131 162
- DE-A- 19 757 184
- PATENT ABSTRACTS OF JAPAN vol. 008, no. 124 (M-301), 9. Juni 1984 (1984-06-09) -& JP 59 027736 A (TOYOTA JIDOSHA KOGYO KK), 14. Februar 1984 (1984-02-14)

## Beschreibung

### Anwendungsgebiet der Erfindung

Die Erfindung betrifft eine Schaltgabel für ein Zahnräderwechselgetriebe von Fahrzeugen. Die mit einer Schaltstange bzw. einer Schaltwelle verbundene Schaltgabel greift formschlüssig in die Schiebemuffe einer Synchronisiereinrichtung, mit der über Kuppelelemente, Losräder mit der Haupt- oder Vorlegewelle kuppelbar sind. Die in Schaltvorrichtungen von Zahnräderwechselgetrieben eingesetzten Schaltgabeln sind drehstarr mit der Schaltstange verbunden. Alternativ dazu kann eine als Schaltschwinge gestaltete Schaltgabel axial verschiebbar und/oder verdrehbar zu der Schaltstange angeordnet werden. Die Betätigung der Schaltgabel erfolgt mittels eines Schaltfingers, der formschlüssig in eine mit der Schaltgabel oder Schaltschwinge verbundene Schaltlasche eingreift und eine Verschiebung der Schaltgabel ermöglicht.

### Hintergrund der Erfindung

Aus dem bekannten Stand der Technik sind unterschiedlich gestaltete Schaltgabeln bekannt. Eine gattungsgemäße Schaltgabel ist aus JP-A-59 027 736 bekannt.

Die DE 41 31 162 A1 zeigt eine axial verschiebbar zur Schaltstange angeordnete Schaltgabel, die auch als Schaltschwinge zu bezeichnen ist. Dieses bekannte als Gußteil gestaltete Bauteil besitzt eine relativ große Wandstärke, verbunden mit einem höheren Gewicht und relativ hohen Herstellkosten.

Der DE 40 17 955 A1 ist eine Schaltgabel zu entnehmen, die unmittelbar drehstarr mit der Schaltstange verbunden ist. Dabei ist die Schaltstange in eine Aufnahmebohrung der Schaltgabel eingesetzt. Diese als Aluminium-Druckgußteil gestaltete Schaltgabel erfordert eine mechanische Nacharbeit zumindest für die Aufnahmebohrung und für die Gleitschuhbefestigung. Dadurch stellt sich ebenfalls eine Kostenfrage für eine Großserienanwendung ein.

Aus der DE 16 80 196 A1 ist eine aus Blech hergestellte Schaltgabel bekannt, die mit einem einseitigen, axial ausgerichteten Befestigungsbügel an der Schaltstange zu befestigen ist. Diese bekannte Schaltgabel besitzt keine Versteifungselemente und ist folglich relativ labil, was einer exakten Schaltung entgegenstehen kann.

### Zusammenfassung der Erfindung

Ausgehend von den bekannten Lösungen und berücksichtigend die JP-A-59027736, ist es Aufgabe der vorliegenden Erfindung, eine gewichtsoptimierte Schaltgabel mit einer ausreichenden Festigkeit zu schaffen, die eine kostengünstige Großserienfertigung ermöglicht.

Diese Aufgabe wird erfindungsgemäß durch eine Schaltgabel gemäß den Merkmalen des Anspruchs 1 gelöst, die zwei zu einer Einheit zusammengefügte Halbschalen umfasst, die jeweils mittels einer spanlosen Formgebung hergestellt sind. Die Anordnung der Halbschalen sieht vor, daß jeweils die Böden der Halbschalen aneinandergefügt sind. Zur Versteifung der Schaltgabel ist jede Halbschale mit einem Kragen versehen, der in Richtung einer Längsachse der Schaltstange verlaufend ausgerichtet ist. Der Kragen umschließt dabei bis auf die gabelförmige Aufnahme die gesamte Schaltgabel außenseitig. Der die Festigkeit der Schaltgabel entscheidend verbessernde umlaufende Kragen erlaubt die Verwendung von dünnwandigem Blech als Ausgangsmaterial zur Herstellung der Halbschalen. Die erfindungsgemäße Schaltgabel besitzt damit eine für eine exakte Schaltung erforderliche hohe Steifigkeit bei gleichzeitig geringem Gewicht. Zur Herstellung der Halbschalen ist eine spanlose Formgebung vorgesehen, die keinerlei Nacharbeit erfordert, aufgrund geringster Fertigungstoleranzen und einer hohen Qualität der Oberflächenrauhigkeit. Im Vergleich zu bisherigen Schaltgabeln stellt sich dadurch ein deutlicher Kostenvorteil ein. Die erfindungsgemäße Schaltgabel eignet sich folglich für eine wirtschaftliche Großserienanwendung. Alternativ zu einer Schaltgabel mit zwei Halbschalen schließt die Erfindung ebenfalls eine Schaltgabel ein, die nur eine Schaltgabel umfasst. Die Öffnung ist in beiden Halbschalen der Schaltgabel von einem Führungskragen umschlossen, der an beiden Halbschalen in Richtung einer Längsachse der Schaltwelle zeigend ausgerichtet ist.

Weitere vorteilhafte Ausgestaltungen der Erfindung gemäß Anspruch 1 sind Gegenstand der abhängigen Ansprüche 2 bis 12.

Nach einer Weiterbildung der Erfindung ist die Schaltgabel unlösbar an einem Führungsrohr befestigt zur Bildung einer Schaltschwinge. Das Führungsrohr umschließt dabei die Schaltwelle. Damit ist die Schaltgabel gegenüber der Schaltstange sowohl verschiebbar als auch verdrehbar angeordnet. Alternativ dazu kann eine erfindungsgemäß gestaltete Schaltgabel ebenfalls unmittelbar an der Schaltstange drehstarr lagepositioniert befestigt werden.

Zur Anbindung der Schaltgabel an das Führungsrohr bzw. an die Schaltstange ist die Schaltgabel an dem von der gabelförmigen Aufnahme abgewandten Ende mit einer Öffnung bzw. einer Bohrung versehen Die geometrische Gestaltung der Öffnung entspricht dabei dem Schaltwellenprofil oder dem Durchmesser des Führungsrohres.

Der Führungskragen vergrößert die Kontaktfläche zwischen der Schaltgabel und der Schaltstange bzw. dem Führungsrohr und verbessert damit eine dauerhafte Ausrichtung, d. h. eine exakte Lage der Schaltgabel gegenüber dem Führungsrohr oder der Schaltstange.

In Weiterbildung der Erfindung, bei der die Schaltgabel mit dem Führungsrohr eine Schaltschwinge bildet, ist diese Baueinheit mit einer versetzt zur Schaltgabel angeordneter Schaltlasche versehen. In diese mit einer Ausnehmung oder einer Einkerbung versehene Schaltlasche greift ein separat zur Schaltstange angeordnetes Bauteil der Getriebeschaltung, beispielsweise ein Schaltfinger formschlüssig ein. Über den Schaltfinger kann eine Verschiebung der Schaltschwinge und damit der erfindungsgemäßen Schaltgabel erfolgen.

Als Maßnahme mit der die Schaltschwinge reibungsmindernd auf der Schaltstange verschiebbar ist, sieht die Erfindung ein auf der Schaltstange gelagertes Führungsrohr vor. Dazu bietet es sich beispielsweise an, eine Gleitlagerbuchse in das Führungsrohr einzupressen, deren radiale Bauhöhe einen Ringspalt zwischen einer Mantelfläche der Schaltstange und der Innenwandung des Führungsrohres überbrückt. Alternativ zu einer Gleitlagerbuchse kann ebenfalls eine Wälzlagerbuchse in das Führungsrohr eingepresst werden.

Ein die Festigkeit der Schaltgabel verstärkender Aufbau wird erzielt, indem die Halbschalen der erfindungsgemäßen Schaltgabel in einer quer zu der Längsachse der Schaltstange verlaufenden Trennebene zusammengefügt sind. Dabei stützen sich die Böden beider Halbschalen aneinander ab und bilden eine große Kontaktfläche. Die zueinander gegenläufig verlaufenden Kragen beider Halbschalen verbessern das Widerstandsmoment und damit die gesamte Steifigkeit der erfindungsgemäßen Schaltgabel.

Die Halbschalen werden vor einer Montage mit dem Führungsrohr oder der Schaltstange stoffschlüssig, unlösbar miteinander verbunden. Vorzugsweise eignet sich dazu eine Widerstandsschweißung oder eine Laserschweißung. Die Erfindung schließt weiterhin ein, die Halbschalen zu verlöten. Eine wirksame Verbindung der Halbschalen kann außerdem durch Vernieten oder Verkleben der Halbschalen erfolgen. Ebenfalls eignet sich ein kraftschlüssiges Verpressen, mit dem eine wirksame Verbindung der Halbschalen erzielbar ist, beispielsweise mittels hintergreifenden Abschnitten und gegenseitiger Verrastung.

Für die Funktion der Schaltvorrichtung ist eine verdrehgesicherte Befestigung der erfindungsgemäßen Schaltgabel an dem Führungsrohr oder der Schaltstange erforderlich. Dazu eignet sich vorzugsweise ebenfalls eine stoffschlüssige Befestigung mittels Schweißung zwischen dem Führungskragen der Schaltgabel und dem Führungsrohr bzw. der Schaltstange. Alternativ kann eine wirksame Befestigung mittels einer Verstiftung oder Vernietung erfolgen, oder durch einen abgestimmten Preßsitz.

Eine vorteilhafte Weiterbildung der Erfindung schließt weiterhin ein, die Schaltgabel im Bereich der gabelförmigen Aufnahme mit zwei gegenüberliegend angeordneten Gleitschuhen zu versehen, die als separate Bauteile der Schaltgabel zugeordnet sind. Zur Erzielung einer vereinfachten Montage der Gleitschuhe sind die Halbschalen im Bereich der Aufnahme mit Aussparungen oder Bohrungen versehen, die eine Befestigung der Gleitschuhe durch eine Verrastung ermöglichen.

Zur Herstellung der erfindungsgemäßen Schaltgabel wird bekanntermaßen eine Stanzung vorgesehen, mit dem die einzelnen Halbschalen hergestellt werden, bevor diese zu einer Einheit zusammenfügbar sind. Alternativ dazu eignet sich ein spanloses Tiefziehverfahren. Beiden Herstellverfahren gemeinsam ist eine hohe Fertigungsqualität, die sich durch eine optimale Oberflächenrauhigkeit auszeichnet, die keinerlei Nacharbeit erfordert. Diese Verfahren ermöglichen eine aufgabengerechte, kostenoptimierte Herstellung der erfindungsgemäßen Schaltgabel.

Zur Erzielung eines weiteren Kostenvorteils kann ein Verfahren eingesetzt werden, bei dem in einem Arbeitsgang gleichzeitig zwei Halbschalen herstellbar sind. Dazu sind die Halbschalen spiegelbildlich zueinander angeordnet und jeweils über die gabelförmige Aufnahme miteinander verbunden. Nach dem Stanzvorgang bzw. dem spanlosen Tiefziehverfahren erfolgt eine Trennung der Halbschalen, die anschließend zur Bildung einer Schaltgabel zusammenfügbar sind.

### Kurze Beschreibung der Zeichnungen

Im folgenden werden unter Bezugnahme auf die Zeichnung bevorzugte Ausführungsformen der vorliegenden Erfindung beschrieben. Es zeigt:
- Figur 1: in einem Längsschnitt eine erfindungsgemäße Schaltgabel, die gemeinsam mit einem Führungsrohr eine Schaltschwinge bildet;
- Figur 2: in einer Explosionszeichnung die in Figur 1 abgebildete Schaltschwinge;
- Figur 3: eine erfindungsgemäße Schaltgabel, die unmittelbar an der Schaltstange befestigt ist.

### Beschreibung der bevorzugten Ausführungsformen

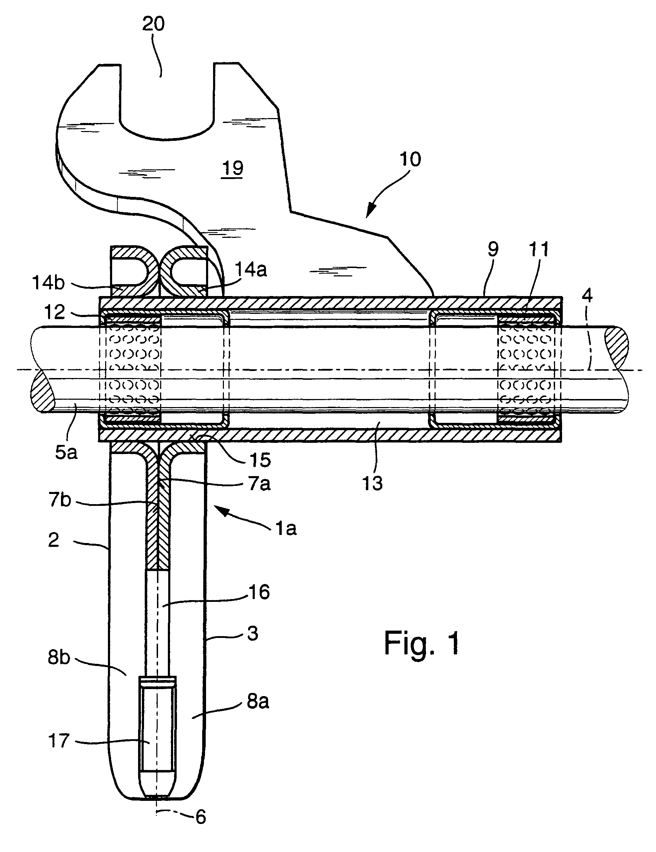

In der Figur 1 ist eine Schaltgabel 1a in einem Längsschnitt dargestellt, die im wesentlichen zwei Halbschalen 2, 3 umfasst. Die Halbschalen 2, 3 sind in einer quer zu einer Längsachse 4 einer Schaltstange 5a verlaufenden Trennebene 6 zusammengefügt. Dabei bilden die Böden 7a, 7b der Halbschalen 2, 3 eine Kontaktfläche. Die aus einem dünnwandigen Blech vorzugsweise durch Stanzen oder ein spanloses Tiefziehverfahren hergestellten Halbschalen 2, 3 sind außenseitig mit einem Kragen 8a, 8b versehen, die eine verbesserte Versteifung bzw. eine verbesserte Festigkeit der Schaltgabel 1a bewirken. Die Schaltgabel 1a ist drehfest an einem Führungsrohr 9 angeordnet, welches die Schaltstange 5a umschließt. Die Schaltgabel 1a in Verbindung mit dem Führungsrohr 9 bildet eine Schaltschwinge 10, die gegenüber der starr angeordneten Schaltstange 5a axial verschiebbar und/oder verdrehbar ist.

Zur reibungsmindernden Verschiebung und/oder Verdrehung der Schaltschwinge 10 sind Lagerbuchsen 11, 12 vorgesehen, die in einem Ringspalt 13 angeordnet sind, welcher sich zwischen einer Innenwandung des Führungsrohres 9 und einer Mantelfläche der Schaltstange 5a einstellt. Alternativ zu den als Wälzlager ausgebildeten Lagerbuchsen 11, 12 sind ebenfalls Gleitlagerbuchsen einsetzbar, die vorzugsweise in das Führungsrohr 9 eingepresst sind. Zur drehstarren Befestigung der Schaltgabel 1a auf der Mantelfläche des Führungsrohres 9, weist die Schaltgabel 1a eine Bohrung 15 auf, in die das Führungsrohr 9 eingepasst ist. Zur Vergrößerung der Kontaktfläche zwischen der Schaltgabel 1 und dem Führungsrohr 9 ist jede Halbschale 2, 3 mit einem die Bohrung 15 umschließenden Führungskragen 14a, 14b versehen, die zueinander gegensätzlich ausgerichtet sind.

Vorzugsweise ist die Schaltgabel 1a stoffschlüssig an dem Führungsrohr 9 befestigt, beispielsweise durch ein Verschweißen der Führungskragen 14a, 14b an dem Führungsrohr 9 oder mittels eines Preßsitzes. Die Schaltgabel 1a bildet eine gabelförmig gestaltete Aufnahme 16, die eine in Figur 1 nicht abgebildete Schiebemuffe übergreift. Am freien Ende der Aufnahme 16 ist die Schaltgabel 1a mit Gleitschuhen 17, 18 versehen, die formschlüssig in eine Ringnut der Schiebemuffe eingreifen. Die Schaltschwinge 10 ist weiterhin mit einer Schaltlasche 19 versehen, welche am Führungsrohr 9 befestigt ist und eine versetzt zur Längsachse 4 der Schaltstange 5a angeordnete Aufnahme 20 aufweist, in die beispielsweise ein Schaltfinger eingreift, um eine Verschiebung der Schaltschwinge 10 zu bewirken.

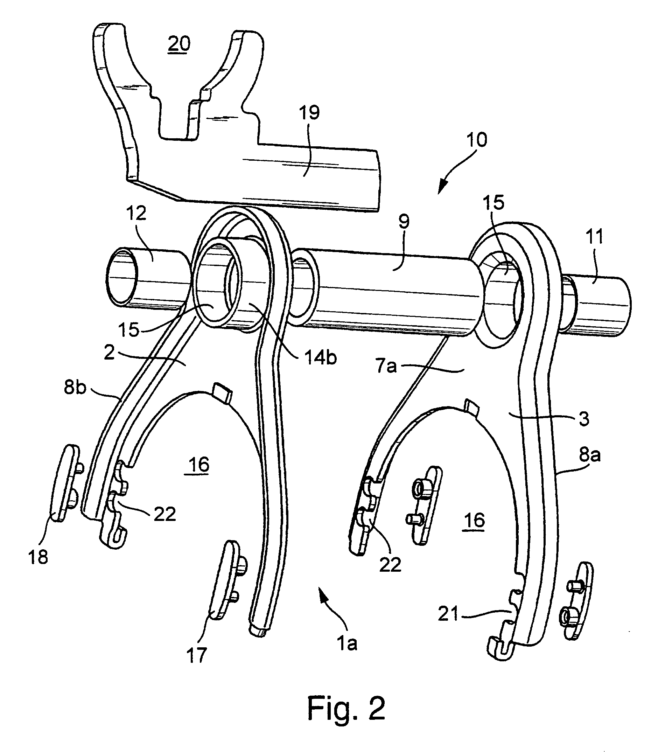

Die Figur 2 zeigt in einer Explosionszeichnung alle Einzelteile der Schaltgabel 1a bzw. der Schaltschwinge 10. Diese Abbildung verdeutlicht insbesondere die gabelförmige Gestaltung der Aufnahme 16, in deren Endzonen jede Halbschale 2, 3 mit Aussparungen 21, 22 versehen ist, die mit entsprechenden Aussparungen der benachbarten Halbschale korrespondieren und die zur Aufnahme der Gleitschuhe 17, 18 vorgesehen sind. Jeder Gleitschuh 17, 18 umfasst zwei Hälften, die axial an die Halbschalen 2, 3 zugeführt werden und formschlüssig miteinander gesichert und dabei gleichzeitig in den Aussparungen 21, 22 an der Schaltgabel 1a lagepositioniert sind. Die Figur 2 verdeutlicht weiterhin die Gestaltung der Halbschalen 2, 3, die aus einem dünnwandigen Stahlblech spanlos geformt, mit Hilfe des umlaufenden Kragens 8a, 8b ein steifes Gebilde darstellen. Die zu einer Einheit zusammengefügten Halbschalen 2, 3 bilden die Schaltgabel 1a, deren Aufbau ein hohes Widerstandsmoment aufweist. Die Schaltlasche 19 umfasst ein an dem Führungsrohr 9 befestigtes Flachprofil, an dem sich an einem Ende eine nach außengerichtete gabelförmig gestaltete Aufnahme 20 anschließt. Die Figur 2 zeigt außerdem die Lagerbuchsen 11, 12 als Einzelteil, die an beiden Stirnseiten in das Führungsrohr 9 eingepresst sind.

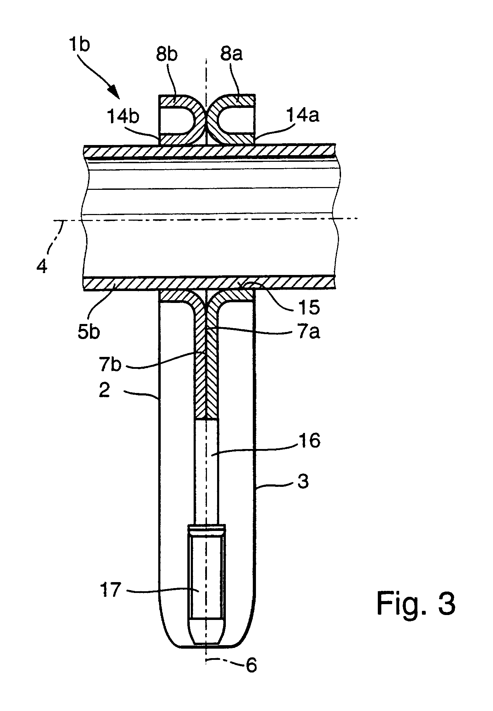

In der Figur 3 ist die Schaltgabel 1b in einem Längsschnitt abgebildet, die unmittelbar starr, d. h. drehstarr an der Schaltstange 5b befestigt ist. Dazu sind beispielsweise die Führungskragen 14a, 14b der Halbschalen 2, 3 an der Schaltstange 5b angeschweißt. Alle übrigen Bauteile bzw. Einzelheiten der Schaltgabel 1b entsprechen der Schaltgabel 1a, die in der Beschreibung zu den Figuren 1 und 2 erläutert wurden.

### Bezugszahlen

- 1a: Schaltgabel
- 1b: Schalgabel
- 2: Halbschale
- 3: Halbschale
- 4: Längsachse
- 5a: Schaltstange
- 5b: Schaltstange
- 6: Trennebene
- 7a: Boden
- 7b: Boden
- 8a: Kragen
- 8b: Kragen
- 9: Führungsrohr
- 10: Schaltschwinge
- 11: Lagerbuchse
- 12: Lagerbuchse
- 13: Ringspalt
- 14a: Führungskragen
- 14b: Führungskragen
- 15: Bohrung
- 16: Aufnahme
- 17: Gleitschuh
- 18: Gleitschuh
- 19: Schaltlasche
- 20: Aufnahme
- 21: Aussparung
- 22: Aussparung

## Patentansprüche

1. Schaltgabel für ein Zahnräderwechselgetriebe, die an einer Schaltstange (5a, 5b) angeordnet ist und deren gabelförmige Aufnahme (16) formschlüssig in eine Ringnut einer Schiebemuffe eingreift, wobei die Schaltgabel (1a, 1b) zwei mittels einer spanlosen Formgebung hergestellte Halbschalen (2, 3) umfasst, die zu einer Einheit zusammengefügt sind, **dadurch gekennzeichnet, dass** die Halbschalen (2, 3) jeweils einen äußeren umlaufenden, geschlossenen Kragen (8a, 8b) aufweisen und weiterhin jede Halbschale (2, 3) mit einer Öffnung (15) für die Schaltstange (5b) versehen ist, wobei sich an die Öffnung (15) ein zylindrischer Führungskragen (14a, 14b) anschließt und wobei jeweils die Kragen (8a, 8b) und die Führungskragen (14a, 14b) von einem Boden (7a, 7b) der Halbschalen (2, 3) ausgehend, zueinander entgegengesetzt in Richtung einer Längsachse (4) der Schaltstange (5a, 5b) zeigend ausgerichtet sind.

2. Schaltgabel nach Anspruch 1, wobei in der Öffnung (15) der Halbschale (2,3) ein die Schaltstange (5a) umschließendes Führungsrohr (9) eingesetzt vorgesehen ist, zur Bildung einer Schaltschwinge (10), bei der die Schaltgabel (1a) verschiebbar und / oder verdrehbar zu der Schaltstange (5a) angeordnet ist (Figur 1).

3. Schaltgabel nach Anspruch 1, bei der die Schaltstange (5b) durch die Öffnung geführt ist und unmittelbar starr mit den Halbschalen (2,3) verbunden ist (Figur 3).

4. Schaltgabel nach Anspruch 2, wobei die Schaltschwinge (10) eine Schaltlasche (19) aufweist, die mit einer Aufnahme (20) versehen ist, in die ein der Schaltschwinge (10) nebengeordnetes Bauteil formschlüssig eingreift.

5. Schaltgabel nach Anspruch 2, deren Führungsrohr (9) wälzgelagert oder gleitgelagert auf der Schaltstange (5a) verschiebbar ist.

6. Schaltgabel nach Anspruch 1, wobei die Halbschalen (2, 3) in einer quer zu der Längsachse (4) der Schaltstange (5a, 5b) verlaufenden Trennebene (6) zusammengefügt sind.

7. Schaltgabel nach Anspruch 1, deren Halbschalen (2, 3) stoffschlüssig, unlösbar miteinander verbunden sind.

8. Schaltgabel nach Anspruch 1, die miteinander vemietete Halbschalen (2, 3) umfasst.

9. Schaltgabel nach Anspruch 1, wobei die Schaltgabel (1a) verdrehgesichert an dem Führungsrohr (9) und die Schaltgabel (1b) drehstarr mit der Schaltstange (5b) verbunden ist.

10. Schaltgabel nach Anspruch 1, bei der die gabelförmige Aufnahme (16) der Schaltgabel (1a, 1b) mit zwei zueinander diametral gegenüberliegenden Gleitschuhen (17, 18) versehen ist.

11. Schaltgabel nach Anspruch 1, bei der zur Herstellung der Halbschalen (2, 3) ein spanloses Tiefziehverfahren vorgesehen ist.

12. Schaltgabel nach Anspruch 11, deren zwei spiegelbildlich zueinander angeordnete Halbschalen (2, 3) in einem Arbeitsgang hergestellt werden, wobei die Halbschalen (2, 3) während des Herstellverfahrens jeweils über die gabelförmige Aufnahme (16) miteinander verbunden sind und nach Fertigstellung voneinander getrennt werden.

## Claims

1. Selector fork for a change-speed gearbox, which is arranged on a selector rod (5a, 5b) and on which the fork-like mount (16) engages in a form-fitting manner in an annular groove of a sliding sleeve, the selector fork (1a, 1b) comprising two half-shells (2, 3) which are produced by means of non-cutting shaping and are joined together to form a unit, **characterized in that** the half-shells (2, 3) each have an outer encircling, closed collar (8a, 8b), and each half-shell (2, 3), furthermore, is provided with an opening (15) for the selector rod (5b), it being the case that the opening (15) is adjoined by a cylindrical guide collar (14a, 14b), and that in each case the collars (8a, 8b) and the guide collars (14a, 14b), starting from a base (7a, 7b) of the half-shells (2, 3), are oriented away from one another in the direction of a longitudinal axis (4) of the selector rod (5a, 5b).

2. Selector fork according to Claim 1, it being the case that a guide tube (9) which encloses the selector rod (5a) is inserted in the opening (15) of the half-shell (2, 3) in order to form a selector rocker (10), in the case of which the selector fork (1a) is arranged in a displaceable and/or rotatable manner in relation to the selector rod (5a) (Figure 1).

3. Selector fork according to Claim 1, in the case of which the selector rod (5b) is guided through the opening and is directly connected, in a rigid manner, to the half-shells (2, 3) (Figure 3).

4. Selector fork according to Claim 2, it being the case that the selector rocker (10) has a selector lug (19) which is provided with a mount (20), in which a component which is independent of the selector rocker (10) engages in a form-fitting manner.

5. Selector fork according to Claim 2, of which the guide tube (9) can be displaced in rolling-contact bearings or slide bearings on the selector rod (5a).

6. Selector fork according to Claim 1, it being the case that the half-shells (2, 3) are joined together in a separating plane (6) running transversely to the longitudinal axis (4) of the selector rod (5a, 5b).

7. Selector fork according to Claim 1, of which the half-shells (2, 3) are connected to one another in an integral and non-releasable manner.

8. Selector fork according to Claim 1, which comprises half-shells (2, 3) which are riveted to one another.

9. Selector fork according to Claim 1, it being the case that the selector fork (1a) is connected in a rotationally secured manner on the guide tube (9) and the selector fork (1b) is connected in a rotationally rigid manner to the selector rod (5b).

10. Selector fork according to Claim 1, in the case of which the fork-like mount (16) of the selector fork (1a, 1b) is provided with two diametrically opposite sliding blocks (17, 18).

11. Selector fork according to Claim 1, in the case of which non-cutting deep-drawing is envisaged in order to produce the half-shells (2, 3).

12. Selector fork according to Claim 11, of which the two half-shells (2, 3), which are arranged in a mirror-inverted manner in relation to one another, are produced in one operation, the half-shells (2, 3) being connected to one another in each case via the fork-like mount (16) during production and being separated from one another following completion.

## Revendications

1. Fourchette de sélection pour boîte de vitesses à engrenages, laquelle est disposée sur une tringle de changement de vitesse (5a, 5b) et dont le logement fourchu (16) pénètre par engagement géométrique dans une rainure annulaire d'un manchon coulissant, la fourchette de sélection (1a, 1b) comprenant deux demi-coques (2, 3) fabriquées par façonnage sans enlèvement de copeaux et assemblées pour former un seul élément, **caractérisée en ce que** les demi-coques (2, 3) présentent chacune une collerette (8a, 8b) fermée sur le pourtour extérieur et de plus chaque demi-coque (2, 3) est munie d'un orifice (15) pour la tringle de changement de vitesse (5b), une collerette de guidage cylindrique (14a, 14b) venant se raccorder à l'orifice (15) et la collerette (8a, 8b) ainsi que la collerette de guidage (14a, 14b) étant respectivement orientées dans des directions opposées l'une à l'autre, en partent d'un fond (7a, 7b) des demi-coques (2, 3), dans le sens d'un axe longitudinal (4) de la tringle de changement de vitesse (5a, 5b).

2. Fourchette de sélection selon la revendication 1, un tube de guidage (9) entourant la tringle de changement de vitesse (5a) étant prévu d'être inséré dans l'orifice (15) des demi-coques (2, 3) afin de former une coulisse de changement de vitesse (10) avec laquelle la fourchette de sélection (1a) est disposée de manière à pouvoir coulisser et/ou tourner par rapport à la tringle de changement de vitesse (5a) (Figure 1).

3. Fourchette de sélection selon la revendication 1, avec laquelle la tringle de changement de vitesse (5b) passe à travers l'orifice et est reliée directement et de manière rigide avec les demi-coques (2, 3) (Figure 3).

4. Fourchette de sélection selon la revendication 2, la coulisse de changement de vitesse (10) présentant une éclisse de changement de vitesse (19) qui est munie d'un logement (20) dans lequel pénètre par engagement géométrique un composant disposé à côté de la coulisse de changement de vitesse (10).

5. Fourchette de sélection selon la revendication 2, dont le tube de guidage (9) est fixé sur un palier à rouleaux ou sur un palier lisse pour pouvoir coulisser sur la tringle de changement de vitesse (5a).

6. Fourchette de sélection selon la revendication 1, les demi-coques (2, 3) étant assemblées dans un plan de séparation (6) perpendiculaire à l'axe longitudinal (4) de la tringle de changement de vitesse (5a, 5b).

7. Fourchette de sélection selon la revendication 1, dont les demi-coques (2, 3) sont reliées entre elles à demeure par engagement de matériaux.

8. Fourchette de sélection selon la revendication 1, qui comprend des demi-coques (2, 3) assemblées par rivetage.

9. Fourchette de sélection selon la revendication 1, la fourchette de sélection (1a) étant reliée au tube de guidage (9) de manière à ne pas pouvoir tourner et la fourchette de sélection (1b) étant reliée à la tringle de changement de vitesse (5b) par une liaison rigide dans le sens de la rotation.

10. Fourchette de sélection selon la revendication 1, avec laquelle le logement fourchu (16) de la fourchette de sélection (1a, 1b) est muni de deux patins de glissement (17, 18) diamétralement opposés.

11. Fourchette de sélection selon la revendication 1, avec laquelle un procédé d'emboutissage sans enlèvement de copeaux est prévu pour la fabrication des demi-coques (2, 3).

12. Fourchette de sélection selon la revendication 11, dont les deux demi-coques (2, 3) disposées en miroir l'une par rapport à l'autre sont réalisées en une seule opération, les demi-coques (2, 3) étant à chaque fois reliées entre elles pendant le procédé de fabrication par le biais du logement fourchu (16) et étant séparées l'une de l'autre une fois terminées.
